# EUROPEAN PATENT APPLICATION

(11) **EP 2 052 842 A1**
(43) Date of publication of application: **29.04.2009**
(21) Application number: 07119121.7
(22) Date of filing: 23.10.2007
(51) Int. Cl.: B29C 49/78, B29C 49/06, B29C 45/76, B29C 49/42, B29C 43/36, B29B 11/12, B29B 11/08

(54) **Process and system for producing a polymer container**

(71) Applicant: Curetti, Glauco E., 1212 Genève (CH); Curetti, Elie R., 1212 Genève (CH)
(72) Inventor: Curetti, Glauco E., 1212 Genève (CH); Curetti, Elie R., 1212 Genève (CH)
(74) Representative: Leman Consulting S.A.

(57) **Abstract**

The present invention concerns a polymer container production process and system in which at least one preform is produced by moulding and said preform is blow moulded to form a container. This process comprises the steps of producing at least one reform in a preform production station (15) of a polymer container production system; of transferring said at least one preform to a transfer system (14) comprising a conditioning range by a transfer means; of transferring said at least one preform to a container blow station (23) by said transfer means; of blow moulding said preform in said container blow station of said polymer container production system to form a container, said polymer container production system comprising more separate and independent preform production stations than container blow stations. The process is characterized in that the operation of the preform production stations is adjusted in time so that the separate and independent preform production stations are operated sequentially at different moments in time.

## Description

### TECHNICAL FIELD

The present invention concerns a polymer container production process in which preforms are first produced by moulding in a preform production station and containers are produced by blow moulding these preforms in a container blow station.

The invention also concerns a polymer container production system for implementing such a process.

### BACKGROUND ART

Today, there are several processes and systems for producing polymer containers. The most important processes are known under the names of Extrusion Blow moulding (EB), Injection Blow moulding (IB) and Thermoforming (TF).

Some other processes and system have also been developed to include a stretch process. One of these processes is known as Extrusion Stretch Blow Moulding (ESBM). In this process, the preform is an extruded parison which is stretched after closing at the bottom. This technology is however not used for standard PET qualities due to its limitations.

For special polymers like Polyethylene terephtalate (PET), Polypropylene (PP) and others, a two-stage process was developed. In this process, a first stage concerns the production of a preform, for example by injection or compression. A second stage concerns the blowing of preforms to obtain the finished bottles or containers. This two-stage process has resulted in improved overall qualities of the container, such as mechanical qualities, barrier qualities and others.

Special stretch processes have been developed for PET containers. Two different types of systems are used today with two different processes and systems, called injection Stretch Blow Moulding (ISBM) and Reheat Blow systems (RHB).

The Injection Stretch Blow Moulding process (ISBM) is also called a one-stage process or hot preform process. In this process, a preform is first moulded, for example by injection or compression, and immediately blown to the finished container with its original heat, on the same integrated system.

The Reheat Blow systems (RHB) are also called two-stage processes or cold preform process. In this process, as mentioned above, the preforms are also moulded, for example by injection or compression, in a preform moulding system. The preforms are produced at the polymer melt temperature. In the case of PET bottles, the preforms are produced at a temperature between 253°C and 260°C. The preforms are then cooled down to ambient temperature, stored and may also be shipped to a different location. Later, on a different system called Reheat Blow system RHB, the preforms are heated (second heating) to the stretch-blow temperature and blown to the finished container. In the case of PET bottles, the blow temperature is comprised between 95°C and 100°C. This corresponds to the second stage of the two-stage process.

In this two-stage process, the production of preforms is independent of the blowing of the bottles or containers. Generally, the preforms are produced in a place by a preform producer and sold to a bottler where the containers are blow moulded.

The advantage of this process is that each step can be optimized separately for maximum output and lowest cost. The preforms are produced on injection moulding systems with the largest possible number of moulds and/or cavities, which ensures an efficient way of producing said preforms.

The drawback of this two-stage process is that two heating phases are necessary. One for producing the preforms and the other one for reheating and blow moulding the containers. This process has high energy costs and high overall costs due to intermediate handling operations for collecting, storing, shipping and loading the preforms again onto the blow moulding systems.

The two-stage process is usually applied to standard bottles with high production volumes.

Another type of equipment uses the so-called one stage process. In this process, the preforms are also produced by moulding system, as in the two-stage process, but are transferred immediately from the preform production station to the container blow station, these stations being integrated in the same system. They are then blown in the container blow station.

The advantage of this kind of system is the lower energy consumption as the polymer is heated only once and is directly blown without subsequent reheating.

The drawback of this system is that the optimization is difficult. In practice, the cycle time for producing one preform is in general between 2 and 8 times longer then the cycle time for blowing a container. While the preform station of the system is generally in operation 100 % of the time, the blowing station is used only part of the time and before having to wait for the next hot preforms to arrive.

The one-stage process is generally used for special bottles with low production volumes.

The proposed system intends to offer an alternative system to the one-stage integrated systems with a separate and better optimisation of the output cycle and therefore an optimal efficiency. The present invention also enables the optimisation the energy consumption.

### DISCLOSURE OF INVENTION

The object of the invention is achieved by a polymer container production process comprising the following steps :
- production of at least one preform by moulding in a preform production station of a polymer container production system;
- transfer of said at least one preform to a transfer system comprising a conditioning range by a transfer means;
- transfer of said at least one preform to a container blow station by said transfer means;
- blow moulding of said preform in said container blow station of said polymer container production system to form a container, said polymer container production system comprising more separate and independent preform production stations than container blow stations;
characterized in that the operation of the preform production stations is adjusted in time so that the separate and independent preform production stations are operated sequentially at different moments in time.

The object of the invention is also achieved by a polymer container production system comprising at least one preform production station, one transfer system comprising a conditioning range and an accumulator zone, and one container blow station, said system comprising more preform production stations than container blow stations and further comprising a transfer means for transferring preforms from the preform production station through the conditioning range to the container blow station, characterized in that it comprises control means for adjusting the timing, temperature and pressure, of the operation of the preform production stations so that all the preform production stations are adjusted separately and independently and operated at different moments in time.

The process of the invention guarantees that each container has the same thermal history. Accordingly, once the production parameters are set, in general equal for the multiple preform stations, or eventually adjustable, they can be used for each preform and therefore, for each finished container. This is achieved to compensate the fact that the cycle time for the preform moulding and the blow moulding are different. This also allows the elimination of idle time at the blow station.

This means that the quality of the produced containers as well as the output performance can be adjusted and optimized separately, as opposed to the prior art processes and equipment in which either the quality or the quantity is optimized. With this process and equipment, it is possible to optimize the power consumption in the same way as in the one-stage system. Furthermore, it is also possible to optimize the production in the same way as in the two-stage system.

Moreover, the power consumption is better distributed over time, which means that there are less peaks of energy consumption during which a large amount of energy must be available.

### BRIEF DESCRIPTION OF THE DRAWINGS

This invention and its advantages will be better understood with reference to the description of particular embodiments and to the enclosed drawings, in which:
- Figure 1 is a general view of a first embodiment of the system according to the present invention;
- Figure 2 shows a second embodiment of the system of figure 1;
- Figure 3 shows a particular embodiment of a step of the process of the invention;
- Figures 4a, 4b, 4c and 4d illustrate an alternative step of a part of the process of the invention;
- Figures 5a to 5d schematically illustrates the process of the invention;
- Figure 6 shows a detail of the system of the invention, used in the process; and
- Figure 7 shows another step of the process of the invention.

### MODES FOR CARRYING OUT THE INVENTION

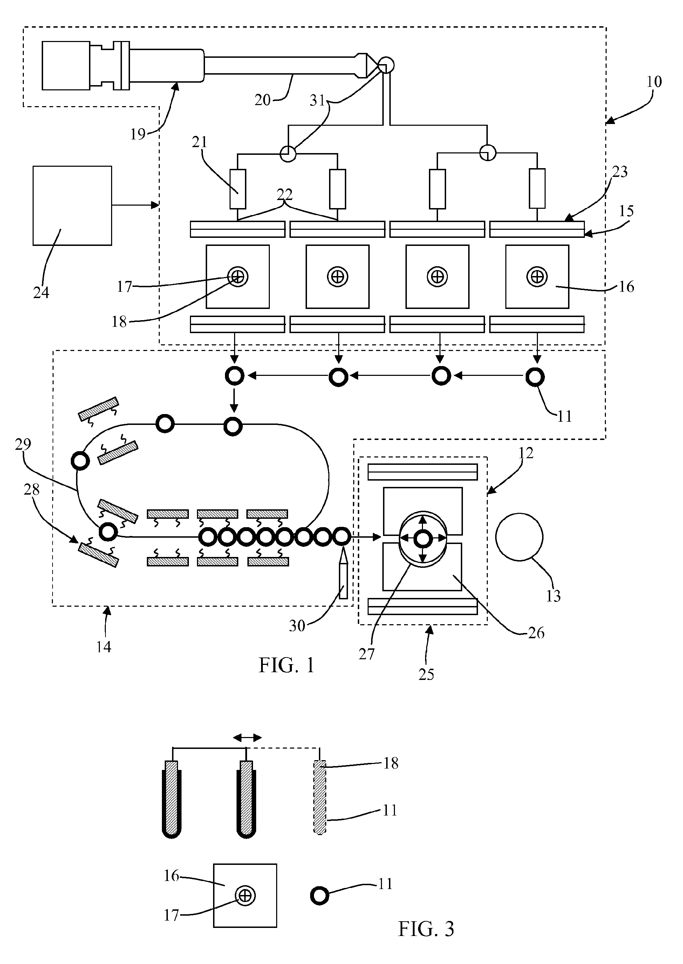

With reference to these drawings, the system of Figure 1 is formed essentially by a preform production part 10 intended for producing preforms 11 and by a container production part 12 intended for producing containers 13 by stretching and blow moulding the preforms 11. These two parts are linked by transfer means 14, these transfer means being arranged for carrying preforms 11 from the preform production part 10 to the container production part 12.

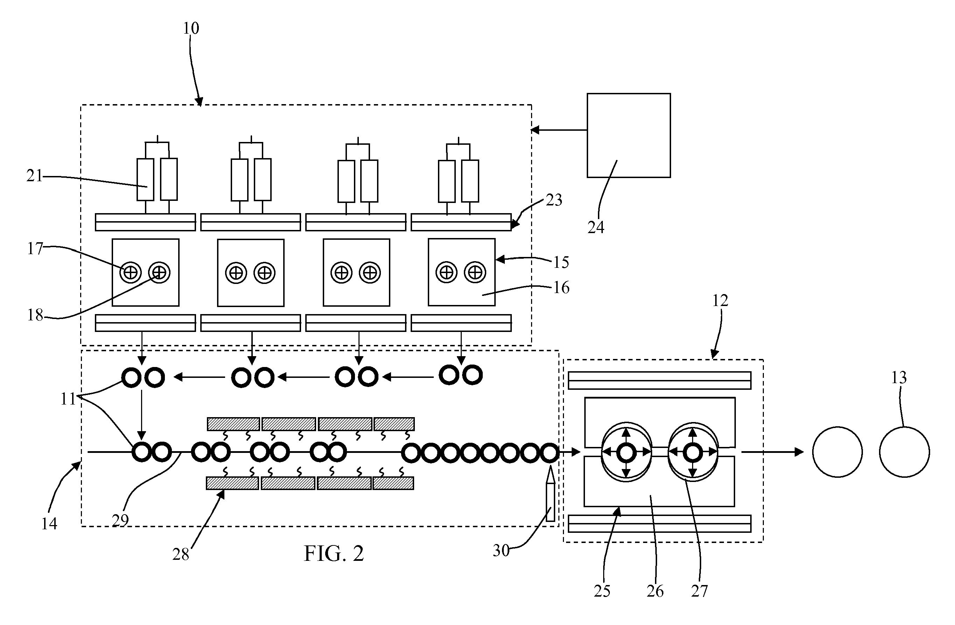

The preform production part 10 comprises a plurality of preform production stations 15, each station comprising a mould 16 with at least one cavity 17. In figure 1, each mould comprises one cavity. The cavity 17 has the external shape of the finished preform and comprises an internal core 18 which determines the internal shape of the preform. In figure 2, each mould comprises two cavities 17. Different numbers of cavities can be realized, depending on the production capacity a user needs to install.

It should be noted that the production capacity depends, mainly, on the number of preform stations with moulds 16 and the number of cavities 17 per mould. In order to enhance the production capacity of the system, it is possible either to add moulds, or to add cavities, or both. Accordingly, in the present description, these two terms, cavity and mould, are synonymous as far as the number of preforms or containers is concerned. In the case that these two terms refer to different elements, this will be clear from the context. One difference that should be noted is that usually when a mould comprises two cavities, two preforms will be produced at the same time in this mould and will also be extracted from the mould at the same time. As will be understood from the description below, when two preforms are produced in two different moulds, they are normally, according to the present invention, not produced and extracted at the same time.

In figure 1, the preform production part 10 comprises a plasticizing unit 19. This unit is intended to feed the plastic melt to the preform production stations 15. As it is well known from a person skilled in the art, the plasticizing unit feeds the plasticized material to the mould 15 and mould cavities 17 through a material distribution system 20 with metering devices 21 and closing nozzles 22. The plasticizing unit is an extrusion and injection unit in charge of preparing the polymer melt for injection or intrusion through the nozzles into the cavities 17.

The preform production part also comprises preform press stations 23 with horizontal or vertical clamps, holding the moulds for the moulding of preforms.

In figure 2, only the preform presses are shown with moulds with two cavities. Thus, the feeding of melted polymer to each preform production station and mould is independent from the other preform production stations and moulds and separately adjustable as far as temperatures and timing are concerned.

The system of the present invention also comprises a control means 24. This control means is arranged to regulated the timing, temperature, pressure and all necessary parameters for the production of the preforms. The control means is in particular in charge of controlling the delivery of melted polymer through the plasticizing unit 19, the material distribution system 20 and the metering device 21.

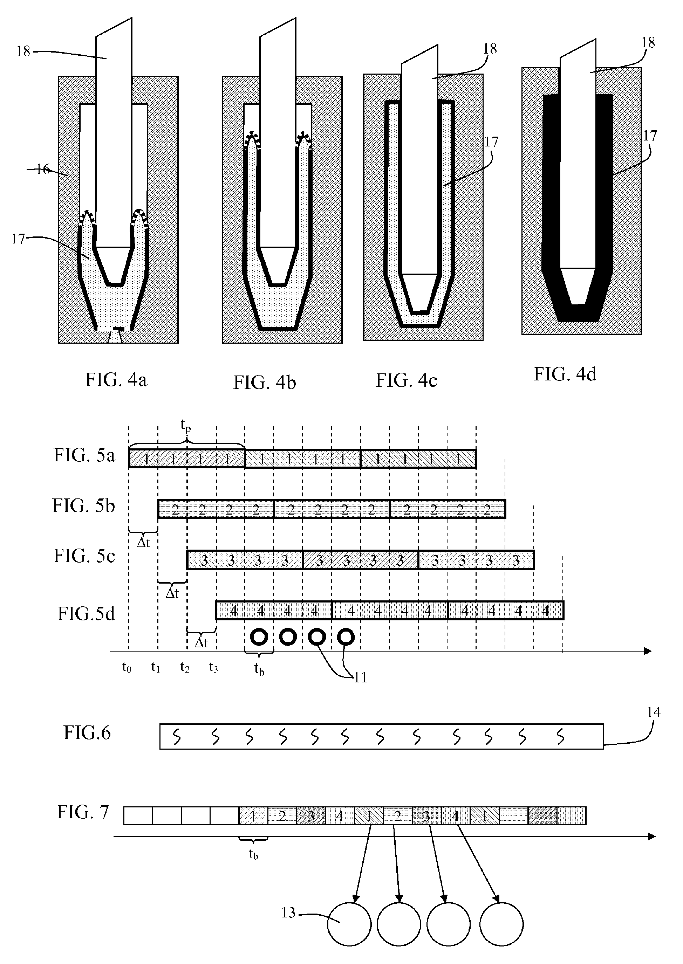

The preforms can be produced in a conventional way. The most common method for producing preforms is injection moulding with an injection moulding machine and a multicavity mould. However, other production methods have proven to give good preform qualities and results. One of these methods illustrated by Figures 4a to 4d realizes the production of the preforms by compression. In this method, the polymer melt is metered and put into the mould cavities before they are completely closed. This is illustrated in Figure 4a. The polymer in contact with the walls of the cavity 17 and core 18 will solidify quickly. The internal part of the polymer will solidify more slowly. In Figure 4b, the nozzle is closed and the core 18 is in a backward position. Due to the cooling and solidifying process of the polymer, this polymer shrinks and the volume of the material diminishes. This is due to the different specific volumes for melted polymer and solid polymer. The filing of the cavity is achieved by the forward movement of the core during compression of the preform, as illustrated on Figures 4a, 4b, 4c and 4d. At this stage, the polymer fills the mould and solidifies. This system eliminates the need for metering the melt quantity with a dosing device or accumulator before the introduction of the melt into the cavity during compression. This uses the difference in specific volume of the material in molted state versus that of the material in solid state. Figure 4d illustrates the polymer in solid state.

In this preform compression method, the final qualities of the preform can be improved by some additional features. The polymers consist of long molecular chains which, in the molten state and during the injection process, are distributed randomly in the melt. The cooling and solidifying of the melt begins when the material gets in touch with the cooled surfaces of the mould cavity 17 and core 18 while between these layers the melt continues to flow during the compression phase. The combination of an axial rotation and longitudinal movement of the core during compression will therefore orient, elongate, align and stretch the molecular chains of the polymer which have already started to solidify in the initial cooling of the preform external walls against the cavity and the core. In fact the compression will be completed when the forward movement of the core will be stopped by the solidification of the melted material. This corresponds to the final volume of the preform.

The orientation of the material already obtained during the production of the preforms during solidification of the melt will further improve the qualities obtained by the orientation during the stretch blow process.

Figure 3 illustrates another embodiment for enhancing the production of the preforms. In this embodiment, the preform production station 15 comprises two cores 18 for each mould or mould cavity. When one preform is moulded in the cavity, it is extracted from the mould but maintained on the core. Thus, the cooling of the preform on the core can continue during the moulding of another preform in the mould.

The container production part 12 essentially comprises at least one container blow moulding station 25 which comprises a means for receiving one or several preforms, a means for stretching and blowing the preforms to form a container and a means to extract the finished container.

The means for blowing the preform comprises at least one blow mould 26 with at least one cavity 27. In each cavity, a hot preform, i.e. a preform at the stretch temperature of the polymer, is introduced. When this preform is introduced and the blow mould 26 closed, a stretch device and air pressure are activated to form the finished container. The mould is then opened and the container is extracted by extraction means.

In figure 1, the container blow station 25 comprises one blow mould 26 with one cavity 27. In figure 2, this station comprises one blow mould 26 with two cavities 27. It should be clear that other numbers of blow moulds and/or cavities can also be used in the container blow moulding station according to the invention.

The system of the present invention is represented in the example with four preform production stations 15, each with one mould 16, with one or more cavities for producing the preforms. According to the invention, it is possible to use a different number of preform production stations 15, in general each with one mould. However, the number of preform production stations is always higher than the number of container blow moulding stations 25. The ratio between the number of preform production stations and blow moulding station is explained in details below, with reference to the process.

The transfer means 14 of the present invention links the preform production part 10 to the container production part 12. This transfer means 14 is used to carry at least one preform extracted from the preform mould 16 and to place it into the blow mould 26 for blow moulding a container.

The system according to the invention also comprises a conditioning range and accumulator zone 28 for temperature conditioning the preforms prior to being transferred to the container blow station 25. The conditioning range 28 comprises temperature regulating elements such as heating ovens or cooling systems used for conditioning and/or profiling the preforms. In this conditioning range, the preforms are treated for an adequate and adjustable time, independent of the preform cycle time tₚ as well as the blow cycle time t_{b} so as to guarantee the most adequate parameters and heat distribution profile to obtain the best quality and profile of the finished containers.

Accordingly, the time spent by each preform between the moment it is produced in the preform production station 15 and the moment it is blown in the container blow station will be exactly the same therefore guaranteeing the same path, transit and residence time and therefore thermal history for all preforms.

The transfer means 14 could comprise a flexible link 29. This flexible link could be a rail, chain, multiple carriage, robot, a prehension arm or any device enabling the optimized transfer of the preforms from the preform production station 15 to the container blow station 25. The flexible link can be enables to regulate any parameters.

In the transfer means 14, the length, the residence and transit times and the applied temperatures or cooling can all be regulated separately to obtain the best results and constant quality of the finished containers.

The transfer means 14 acts as an accumulator or buffer for the preforms. In normal functioning, there are always more preforms on the transfer means than cavities 27 in the blow moulds. If the preform production stations stop, for example due to a failure, the preforms that are buffered on the transfer means are blow moulded until there are no more preforms available. If the container blow mould station stops, the preforms produced by the preform production station are extracted and accumulated outside the system until the plasticizing unit is emptied and stopped.

The container blow station 25 comprises a temperature sensor 31 for measuring the temperature of the preform just before it is put into the cavity 27 of the blow mould 26. This sensor 31 is linked to the conditioning range in order to enable the regulation of the heating or cooling or time in this conditioning range according to the temperature measured by the sensor.

The container production station 25 also contains an extraction station (not represented) for extracting the finished containers from the blow moulds 26. As this extraction station is conventional relative to prior art, no further description of said extraction station is supplied herein.

The process of the invention is described with reference to Figures 5a to 5d, Fig. 6 and Fig. 7 with an system as shown in Figure 1.

In the example described, it is assumed that the cycle time tₚ for moulding a preform is 4 times the cycle time t_{b} for blowing a container, and therefore, the example shown has four preform production stations. Depending on the specific application, container or polymer, the ratio between the moulding cycle time tₚ for a preform and the blow moulding cycle time t_{b} is in general comprised between 2 and 8.

According to the process of the invention, the cycle begins with the moulding of a first preform or batch of preforms in the preform production station 15, at a moment referred to as to in figure 5a. When using a preform production station and mould 16 comprising one cavity 17 as in Figure 1, one preform is produced in each cycle. When using a preform production station and mould 16 comprising two cavities 17, as in Figure 2, two preforms are produced at the same time. These two preforms form a batch. It should be clear that other quantities of preforms can be produced at a same time, according to the system used.

At a moment referred to as t₁ on figures 5b, the next preform or batch of preforms is moulded in another mould of the preform production station 15. The delay Δt between to and t₁, i.e. the delay between the beginning of the moulding of two consecutive preforms or batches can be adjusted since the preform stations are all separate and independent. This delay can be adjusted separately so as to obtain the best final results, i.e. the best qualities of the finished bottles or products.

A third preform is moulded at time t₂ which is equal to t₁ + Δt and a fourth preform is moulded at t₃ = t₂ + Δt. As we assumed that the time cycle tₚ for moulding a preform is four times the time cycle t_{b} for blowing a container, at time t₄ = t₃ + Δt, the preform for which moulding begun at t₀ is now terminated. Thus, this preform is carried by the transfer means 14 from the preform production station 15 to the container blow station 25, if necessary through the conditioning range 28 illustrated in Figure 6.

To optimize a production of bottles where the bottle cycle time t_{b} corresponds for instance to ¼ of the preform cycle tₚ, as in our example, the delay between each of the four separate preform stations will be set according to the blow cycle t_{b}. This will allow the bottle blow station to be in operation 100 % of the time and therefore to be operated at its maximum efficiency.

After this first preform is blow moulded and a container is terminated, i.e. at a time t₄ + Δt, the second preform is ready to be carried to the blow moulding station by the transfer means 14. This transfer means transfers the preform through the conditioning range 28. This is illustrated in Figure 6. Thus the cycle can continue. This is illustrated in Figure 7.

The process of the invention is similar when using an system as represented by figure 2. The only difference is that, as each preform mould 16 comprises two cavities 17 for producing two preforms simultaneously, the container blow moulding station 25 should comprise one blow mould 26 with two cavities 27 for producing two containers simultaneously. The container blow moulding station 25 could also comprise two moulds with one cavity. The fact that the mould 16 of the preform production station 15 has one or two or more cavities has no influence on the time shifting Δt between the production of two consecutive preforms or batches of preforms.

The ratio between the preform cycle time tₚ and the blow cycle time t_{b} (in general between 2:1 and 8:1) determines the number of separate preform stations required. Accordingly, the time interval between the moulding of consecutive preforms is adjustable and is calculated from the ratio of tₚ to t_{b}.

It is also possible to use an system comprising for example six preform moulds 16, even if the cycle time for making a preform is only four times the cycle time for blowing a container. In this case, either two preform moulds could be not used or the use of the preform moulds could be distributed, with a time-shift corresponding to the fourth of the total preform production cycle time. This particular embodiment allows for greater flexibility as it is possible to adapt the process for a blowing time cycle comprised between four and six times the preform cycle time, without any modification of the system.

The system can thus be designed in order to remain more flexible with a higher number of preform production stations 15 than the anticipated ratio tₚ to t_{b}, so that it could also be used for applications with a higher ratio which may not have been anticipated at the beginning of the production of containers, parts or bottles in a material different then PET with different cooling parameters. This could be interesting as the stretch blow moulding technologies applied to PET start to be applied also to other materials like PP and PLA or other bottles and shapes.

In general, the system of the present invention comprises x preforms production stations 15, y container blow moulding stations and z cavities. The number of cavities z is the same in the mould 16 as in the blow moulds 26. In a preferred embodiment, the value x is comprised between 2 and 8, y is equal to 1 and z is 1 or 2. Of course, other values are also possible for the purpose of the invention. Such an system could be designated as Px By - Cz.

According to the invention, the multiple separate and independently working preform production stations with one container blow moulding station leads to the optimization of the total production process through the separate optimization of the preform production process as well as the blow moulding process. With this approach, there is no idle time neither in the production of the preforms nor in the blowing of the containers. Thus, the system is used at the maximum of its capacity and efficiency. Moreover, all the preforms have the same thermal history. In consequence, the quality of the containers is also optimized.

The process and the system of this invention can be applied to different kinds of polymers such as PET, already mentioned, but also to PP (polypropylene), PLA or other plastic materials.

The system and process of the invention is particularly interesting for special bottles with high capacity such as for examples kegs, but it can also be used advantageously for standard bottles and high production volumes.

By using compression for the production of the preforms, it will be possible to apply lower injection and clamp pressures with lower hydraulic pressures. This will allow the utilization of simpler and smaller presses.

Another application anticipated for this invention is the application of the system without integrated container blow moulding station. In this case, the preform production part, the transfer means and conditioning range are used to produce preforms or batches of hot preforms which are then transferred to a two stage stretch blow moulding system with one blow mould and n cavities, this number n corresponding to the number of preforms in one batch. These n preforms will be blown at the same time to form the finished containers.

Accordingly, the invention can not only be applied to produce in line finished containers from raw materials, but will also allow the feeding of batches of hot preforms to separate two-stage or RHB systems to convert them into an in-line system, without intermediate cooling and handling of preforms.

The system can therefore be used in combination with the blow part manufactured by the same manufacturer of the preform part of the machine, but also in combination with blow systems manufactured by other manufacturers and even in combination with such systems already installed in the field. The user of such an system who buys the preforms externally today can therefore convert his system to use raw material and produce the preforms for his system with a significant economic advantage, depending on the difference between the price of raw material and the price of preforms.

The principle of the present invention could be used in different ways.. One important feature to optimize the production of the system is to move only light weight parts of the system, i.e. for example the preforms and bottles instead of the heavy parts made in steel like moulds in carrousels.

## Claims

1. Polymer container production process comprising the following steps :
- production of at least one preform by moulding in a preform production station of a polymer container production system;
- transfer of said at least one preform to a transfer system comprising a conditioning range by a transfer means;
- transfer of said at least one preform to a container blow moulding station by said transfer means;
- blow moulding of said preform in said container blow moulding station of said polymer container production system to form a container, said polymer container production system comprising more separate and independent preform production stations than container blow stations;
**characterized in that** the operation of the preform production stations (15) is adjusted in time so that the separate and independent preform production stations are operated sequentially at different moments in time.

2. Polymer container production process according to claim 1, **characterized in that** the time adjustment of the time interval between the operation of two consecutive separate and independent preform production stations (15) is such that the moulding of two consecutive preforms (11) is time shifted, the time shifting (Δt) between the beginning of the moulding of two consecutive preforms depending on the cycle time (t_{b}) for blowing a container in said container blow moulding station (25).

3. Polymer container production process according to claim 1, **characterized in that** the number of multiple separate and independent preform production stations (15) is at least equal to the ratio of the time cycle (tₚ) for moulding one preform divided by the time cycle (t_{b}) for blow moulding the preform (11) to a container (13).

4. Polymer container production process according to any of the preceding claims, in which the transfer means (14) transfers the preforms (11) produced by the preform production stations (15) sequentially, in a chronological order respective to their production time in such a way that the transfer of each preform has the same time and thermal history from the moment it is extracted from the preform production station (15) until the moment it is placed in the container blow station (23).

5. Polymer container production process according to claim 1, **characterized in that** the transfer means (14) transfers the preforms to a conditioning range (28) prior to transferring them to the container blow moulding stations (25).

6. Polymer container production process according to claim 1, **characterized in that** the temperature of the preforms (11) is modified in the conditioning range (28).

7. Polymer container production process according to claim 1, **characterized in that** the preforms (11) are produced by compression.

8. Polymer container production process according to claim 7, **characterized in that** the preforms (11) are produced in moulds (16) comprising a female cavity (17) and a male core (18) and **in that** the core is rotated around a longitudinal axis during at least part of the moulding and compression of the preform.

9. Polymer container production process according to claim 8, **characterized in that** during the moulding phase, the volume of the cavity (17) between female cavity and core (18) corresponds to the weight and volume of the polymer melt needed for moulding one preform and after compression and cooling in the cavity, the final volume of the solidified preform is reached.

10. Polymer container production process according to any of the preceding claims, **characterized in that** the preforms (11) are produced in batches, the preform of a same batch being moulded simultaneously under the same conditions and these preforms being simultaneously blow moulded to form finished containers.

11. Polymer container production system comprising at least one preform production station, one transfer system comprising a conditioning range (28) and an accumulator zone, and one container blow moulding station (25), said system comprising more preform production stations (15) than container blow moulding stations (25) and further comprising a transfer means (14) for transferring preforms from the preform production station (15) through the conditioning range (28) to the container blow station (23), **characterized in that** it comprises control means (24) for adjusting the timing, temperature and pressure, of the operation of the preform production stations (15) so that all the preform production stations are adjusted separately and independently and operated at different moments in time.

12. System according to claim 11, **characterized in that** the ratio between the number of preform production stations (15) and the number of container blow moulding stations (25) depends on the ratio between the cycle time (tₚ) for producing a specific preform and the cycle time (t_{b}) for blowing a corresponding container.

13. System according to claim 11, **characterized in that** it comprises an injection moulding system for producing preforms, said injection moulding system comprising one plasticizing unit (19) for melt polymer into moulds in multiple separate and independent preform production stations (15).

14. System according to claim 11, **characterized in that** the preform production station (15) comprises means for delivering batches of preforms to a separate blow moulding system.
